**Europäisches Patentamt**

**European Patent Office**

**Office européen des brevets**

(19)

(11) Veröffentlichungsnummer: **0 096 200**
**B1**

(12) # EUROPÄISCHE PATENTSCHRIFT

(45) Veröffentlichungstag der Patentschrift:
**13.08.86**

(21) Anmeldenummer: **83103873.2**

(22) Anmeldetag: **20.04.83**

(51) Int. Cl.⁴: **E 02 F 3/80,** E 02 F 3/96

(54) **Fahrzeug mit einem Arbeitsgerät.**

(30) Priorität: **24.05.82  DE 8215040 U**

(43) Veröffentlichungstag der Anmeldung:
**21.12.83 Patentblatt 83/51**

(45) Bekanntmachung des Hinweises auf die Patenterteilung:
**13.08.86 Patentblatt 86/33**

(84) Benannte Vertragsstaaten:
**AT CH DE FR IT LI SE**

(56) Entgegenhaltungen:
**AT-B-321 621**
**BE-A-649 699**
**DE-B-1 506 415**
**GB-A-868 473**
**US-A-3 285 625**
**US-A-4 106 645**

(73) Patentinhaber: **Karl Kässbohrer Fahrzeugwerke GmbH, Peter- Schmid- Strasse 13, D-7900 Ulm (Donau) (DE)**

(72) Erfinder: **Haug, Walter, Winterhalde 5, D-7906 Blaustein 1 (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

EP 0 096 200 B1

**Beschreibung**

Die Erfindung bezieht sich auf ein Fahrzeug mit einem Arbeitsgerät, das über eine Haltevorrichtung am Fahrzeug lösbar befestigt ist, wobei die Haltevorrichtung einen am Fahrzeug angeordneten, über Stelleinrichtungen gegenüber diesem veränderbaren Aufnahmerahmen mit Koppelelementen aufweist, denen am Arbeitsgerät Gegenkoppelelemente zugeordnet sind, wobei am Arbeitsgerät eine quer in Fahrtrichtung orientierte, dreiecksförmige Platte angeordnet ist, die in ihrem oberen Bereich als Gegenkoppelement einen einzigen in Richtung der Ankoppelung vorspringenden Haken aufweist.

Ein Fahrzeug der eben genannten Art ist aus der US-PS 3,285,625 bekannt. Die Platte ist mit ihrer Ebene zum Arbeitsgerät hin geneigt und seitlich durch einen umlaufenden Rand eingefaßt.

Das Koppelement besteht aus einem im Grundriß in etwa dreiecksförmigen Koppelement, das eine Aufnahmespitze aufweist und mit Hilfe der Stelleinrichtung um eine horizontale Achse verschwenkt werden kann.

Für das Aufnehmen des Arbeitsgerätes muß das Koppelement so ausgerichtet in das Gegenkoppelement eingeführt werden, daß es zwischen den Randflanschen der Platte zu liegen kommt. Anschließend wird das Koppelement im Gegenkoppelement durch einen unterhalb der Platte befindlichen Rasthaken verriegelt.

Das Ankoppeln des bekannten Arbeitsgerätes auf unebenem Gelände kann dann Schwierigkeiten bereiten, wenn die Abstellebene des Arbeitsgerätes gegenüber der Fahrebene des zum Ankoppeln heranfahrenden Fahrzeuges verwunden ist, bzw. ihr gegenüber winkelig ist. In diesem Fall ist das Koppelement bezüglich des Gegenkoppelementes nicht so ausgerichtet, daß eine sichere Aufnahme erfolgen kann. Das Arbeitsgerät muß infolgedessen zunächst in die richtige Ankoppelposition beispielsweise dadurch gebracht werden, daß es höhenmäßig ausgerichtet wird. Dies bedingt einen Mehraufwand und verzögert den Ankuppelvorgang.

Aus der Praxis ist noch eine Haltvorrichtung für Schneepflüge bekannt, bei der der Aufnahmerahmen des Fahrzeuges eine starre, quer zur Fahrtrichtung orientierte rechteckige Platte aufweist. Der Schneepflug besitzt eine flächenmäßig größere ebenso orientierte Gegenplatte, die zwei Aufhänghaken für den Halteeingriff an der Platte des Aufnahmerahmens aufweisen. Für die gegenseitige Befestigung der Platte sind auch noch Sicherungsschrauben vorgesehen.

Zwischen der Platte des Arbeitsgerätes und dem Schneepflug ist ein heb- und senkbarer Rahmen vorhanden, der auch zum Heben und Senken Stelleinrichtungen aufweist.

Die bekannte Haltevorrichtung ist allenfalls für eine Ankoppelung des Arbeitsgerätes am Fahrzeug bei ebenem Gelände geeignet. Die beiden Platten müssen für die Ankoppelung im wesentlichen parallel zueinander ausgerichtet sein, da ansonsten die Haken nicht in den Halteeingriff bringbar sind. Auch ist es notwendig, daß die Platte des Fahrzeuges beim Ankoppeln tiefer positioniert ist als die Haken des Arbeitsgerätes. Da bei der bekannten Haltevorrichtung die Platte des Fahrzeuges nicht heb- und senkbar ist, es bei Schneefall vorkommen, das mit dem Fahrzeug an das verschneite Gerät herangefahren werden muß und aufgrund des Schneefalles das Fahrzeug auf einem höheren Niveau an das Arbeitsgerät heranfährt, als es bei dem Abstellen des Schneepfluges der Fall war. In diesem Fall ist das Ankoppeln schwierig, weil zunächst dafür gesorgt werden muß, das Fahrzeug zumindest im Ankoppelbereich durch Wegräumen des Schnees so weit herabzusenken, daß die Haken der Platte des Arbeitsgerätes sich niveaumäßig über der Platte des Fahrzeuges befinden.

Theoretisch ist es auch möglich, für das Ankoppeln des Arbeitsgerätes bei unterschiedlichen Niveaus zwischen dem Gerät einerseits und dem Fahrzeug andererseits die Stelleinrichtungen des Arbeitsgerätes zu verwenden. Diese müssen hierzu bereits vor dem Koppelvorgang an die Energieversorgung des Fahrzeuges angeschlossen werden. Es ist dann möglich, die Platte des Arbeitsgerätes hochzufahren, um die niveaumäßige Anpassung an die Platte des Fahrzeuges zu erreichen. Nachteilig ist allerdings dabei, daß bei einem derartigen Ankoppelvorgang die Verbindungsleitungen zwischen den Stelleinrichtungen des Arbeitsgerätes und dem Fahrzeug nicht eingeklemmt oder abgerissen werden. Diese Gefahr besteht besonders bei Fahrzeugen, in deren Frontbereich vom Fahrersitz nicht gut eingesehen werden kann.

Der vorliegenden Erfindung liegt die Aufgabe zugrunde, ein Fahrzeug der eingangs genannten Art zu schaffen, mit dem das Ankoppeln auch im schwierigen Gelände bei nicht exakter Ausrichtung zwischen Fahrzeug und Arbeitsgerät ohne Einweisung möglich ist.

Diese Aufgabe wird erfindungsgemäß dadurch gelöst, daß die Platte zur pendelnden Aufnahme des Hakens ohne seitliche Begrenzungen vertikal ausgerichtet ist und als Koppelement für den offenen Haken ein in etwa horizontaler Bolzen vorhanden ist, der zwischen zwei Wangen gehalten ist.

Bei der Erfindung geht die Ankoppelung einfach vonstatten. Das Fahrzeug fährt mit dem Aufnahmerahmen an das Arbeisgerät heran. Der Aufnahmerahmen gelangt dabei in Anlage an die Platte. Der Aufnahmerahmen wird mit Hilfe der Stelleinrichtung so verfahren, daß das entsprechende Koppelement in Eingriff gerät mit dem als Haken ausgebildeten Gegenkoppelement. Anschließend hebt man mit Hilfe der Stelleinrichtung das Arbeitsgerät durch leichten Zug am Gegenkoppelement etwas an, so daß das Arbeitsgerät vollends in Anlage gerät mit dem Aufnahmerahmen und eine vollständige Koppelung erreicht wird.

Durch den Eingriff des Koppelelements am Gegenkoppelelement und das Anheben des Arbeitsgerätes erfolgt auch bei einem gegenüber dem Fahrzeug schräg stehenden Arbeitsgerät die für die vollständige Koppelung notwendige Anpassung. Der Fahrer muß für das Einpassen des Arbeitsgerätes seinen Fahrplatz nicht verlassen; eine eigene Einweisperson ist im Gegensatz zudem bekannten Fahrzeug nicht notwendig. Im Gegensatz zum Stand der Technik ist bei der Erfindung die Ankoppelung auch bei einem Niveauunterschied der Aufstandsfläche für das Arbeitsgerät und das Fahrzeug ohne Gefahr für Verbindungsleitungen auf einfache Weise möglich.

Die beiden Wangen des als Koppelelement ausgebildeten Bolzens ermöglichen eine Zentrierung des Hakens am Aufnahmerahmen.

Für das Zentrieren des Hakens gegenüber dem Aufnahmerahmen ist es günstig, wenn der Haken dreiecksförmig gestaltet ist, wobei eine Spitze vertikal nach unten gerichtet ist. Dies erleichtert das Einführen des Hakens in die Wangen des Bolzens.

Diesbezüglich ist es weiterhin von Vorteil, wenn die Wangen einen gegenseitigen Abstand aufweisen, der der horizontalen Breite des Hakens an der Basis des Dreiecks entspricht. Das Arbeitsgerät ist auf diese Weise verrutschsicher auf dem Bolzen des Aufnahmerahmens gehalten.

Das Eingreifen des Hakens in den horizontalen Bolzen des Aufnahmerahmens wird dadurch erleichtert, daß der Haken einen L-förmigen Querschnitt aufweist, wobei der eine L-Schenkel in etwa horizontal verläuft und an der Platte befestigt ist, während der andere in Richtung der Ankoppelung gesehen, leicht nach vorne geneigt ist.

Generell besitzt die Erfindung gegenüber dem Stand der Technik den Vorteil, daß auch bei ungleicher Lastverteilung des Arbeitsgerätes ohne Schwierigkeiten eine Ankoppelung möglich ist. In der Praxis kommt es relativ selten vor, daß die Arbeitsgeräte bezüglich der Haltevorrichtung so ausgewogen sind, daß sich eine gleichmäßige Lastverteilung bezüglich der Haltevorrichtung ergibt. Zum Teil sind die Antriebe asymetrisch angeordnet, so daß sich schon rein deswegen ein Ungleichgewicht einstellt. Zum Teil sind aber auch die Arbeitsgeräte ungleichmäßig mit Schmutz, Schnee usw. befrachtet, so daß sich hierdurch die Ungleichverteilung ergibt. Da bei der Erfindung der Haken eine oben liegende, kleine Aufnahme darstellt, ist es nach dem Eingreifen des Hakens in den Bolzen möglich, durch einfaches Hochheben des Hakens das Arbeitsgerät gegenüber dem Fahrzeug so weit auszurichten, daß trotz unebenem Gelände oder einer ungleichen Lastverteilung das Arbeitsgerät sich gegenüber dem Fahrzeug ausrichtet und gleichsam selbsttätig zentriert.

Sofern der Bolzen mit den Wangen einstückig gefertigt werden soll, ist dies leicht möglich. Der Bolzen kann dann in der Form einer Tasche ausgebildet werden, an deren Seitenrändern die Wangen angeformt sind.

Nachfolgend ist die Erfindung anhand von Zeichnungen dargestellt.

Es zeigen:

Figur 1 die Seitenansicht eines Fahrzeuges zusammen mit einem als Schneefräse ausgebildeten Arbeitsgerät und einer ersten Ausführungsform einer Haltvorrichtung,

Figur 2 eine zu Figur 1 analoge Seitenansicht, bei der das Fahrzeug zum Zwecke des Ankoppelns näher an das Arbeitsgerät heranbewegt worden ist,

Figur 3 eine analoge Seitenansicht zu den Figuren 1 und 2, mit Ansicht des vollständig angekoppelten Arbeitsgerätes,

Figur 4 eine Seitenansicht des angekoppelten und hochgehobenen Arbeitsgerätes,

Figur 5 eine schematische Darstellung der Haltevorrichtung.

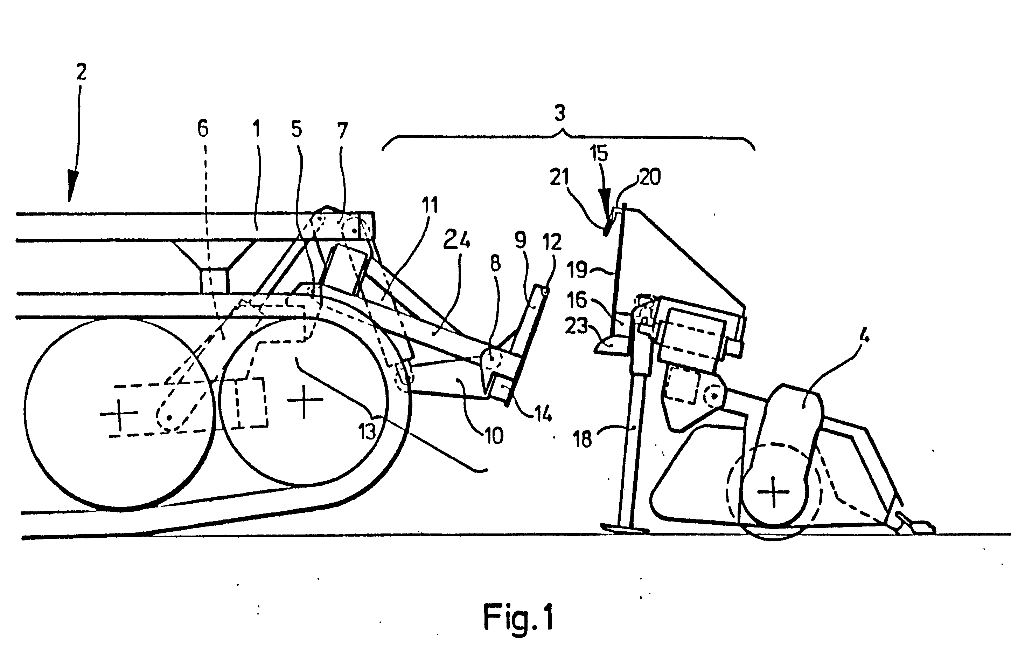

In Figur 1 der Zeichnung ist das Heck 1 eines Fahrzeuges 2 gezeigt, das eine Haltevorrichtung 3 zum lösbaren Befestigen eines Arbeitsgerätes 4 am Fahrzeug aufweist. Im vorliegenden Fall ist das Arbeitsgerät eine Schneefräse.

Bei der in den Figuren 1 bis 5 gezeigten ersten Ausführungsform einer Haltevorrichtung 3 ist am Fahrzeug ein nach rückwärts gerichteter Träger 24 vorhanden, der am Heck 1 um eine horizontale Achse 5 verschwenkbar ist. Zum Verschwenken ist eine Stelleinrichtung 6 vorgesehen, die mit ihrem einen Ende am Heck des Fahrzeugs befestigt ist und mit dem anderen Ende an einem Arm 7 angreift, der starr mit dem Träger 24 verbunden ist. Der Träger 24 trägt an seinem freien Ende ebenfalls eine horizontale Achse 8, an der zwei senkrecht auf dem Träger 24 stehende Wangen 9 drehbar gelagert sind. Zum Verkippen der Wangen sind diese mit einem etwa senkrecht von den Wangen abstehenden Schwenkarm 10 verbunden. Zwischen dessen freiem Ende und dem Arm 7 ist zum Verschwenken der Wangen eine Stelleinrichtung 11 beispielsweise in der Form eines Zylinder-Kolbenantriebs eingefügt.

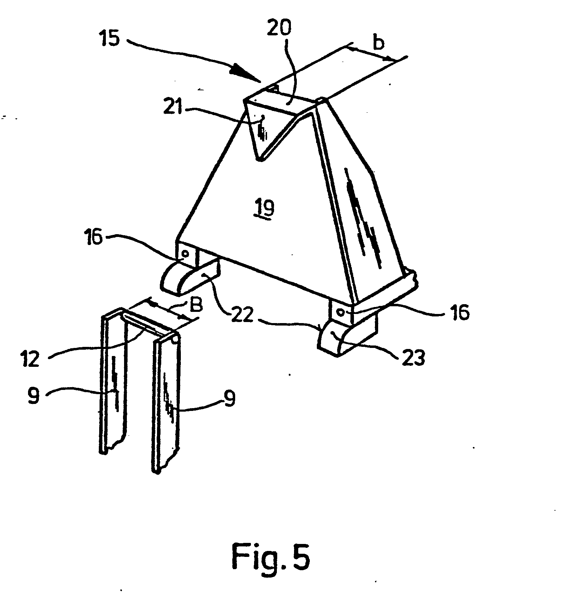

Die beiden Wangen 9 sind, wie Figur 5 zu entnehmen ist, im wesentlichen parallel zueinander ausgerichtet und an ihren freien Enden über einen in etwa horizontalen zylindrischen Bolzen 12 miteinander verbunden.

Der Träger 24, die Arme 7 und 10, sowie die Wangen 9 bilden zusammen einen Aufnahmerahmen 13 zum Aufnehmen und Handhaben des Arbeitsgerätes 4. Der Zylinderbolzen 12 fungiert als Koppelelement und dient zusammen mit zwei weiteren, unten und seitlich der Wangen angeordneten Befestigungselementen 14 zum Ankoppeln des dem Arbeitsgerät 4 zugeordneten Teils der Haltevorrichtung 3 mittels Gegenkoppelelement 15.

Das in Figur 1 mit Hilfe von entfernbaren Hilfsstützen 18 abgestellte Arbeitsgerät 4 ist mit dem zweiten Teil der Haltevorrichtung lösbar bestückt. Diese umfaßt eine in der Figur 1 gezeigte Aufnahmeposition, eine etwa vertikal, quer zur Fahrtrichtung orientierte Platte 19, die dreiecksförmig gestaltet ist. Das Dreieck besitzt zwei gleich lange Schenkel, die zu der nach oben gerichteten Spitze führen. Die Spitze ist allerdings abgeschnitten. Dort befindet sich das als Haken ausgebildete Gegenkoppelelement 15. Dieser springt im vorliegenden Fall in Fahrtrichtung gesehen nach vorne. Der Haken besitzt im Querschnitt L-Form, wobei der eine L-Schenkel 20 in der gezeigten Position etwa horizontal verläuft und an der Platte 19 befestigt ist, während der andere 21 in Richtung der Ankoppelung gesehen leicht von der Platte weggeneigt ist. Der Schenkel 21 ist dreiecksförmig gestaltet, wobei eine Spitze vertikal nach unten gerichtet ist. Die größte Breite b der Schenkel 21 und 20 ist geringfügig kleiner als der Abstand B zwischen den beiden Wangen 9.

Der nach unten offene Haken 15 des Gegenkoppelelements ist dem Bolzen 12 zugeordnet. Der Haken stellt damit an der dreiecksförmigen Platte 19 das obere, zentrale Koppelelement dar, das zum Zentrieren beim Ankoppeln dient. An den beiden anderen Eckpunkten der dreiecksförmigen Platte sind die weiteren Befestigungselemente 16 angeordnet, die den Befestigungselementen 14 entsprechen und mit diesen auf übliche Weise gekoppelt werden können.

Als Befestigungselemente kommen formschlüssige und/oder kraftschlüssige Elemente in Frage, wie sie in der Technik bekannt sind, beispielsweise Nocken-Vertiefungspaarungen, Führungen aller Art, Schrauben, Schnellkupplungen usw.

Natürlich können diese Elemente auch durch Stelleinrichtungen der üblichen Art für das Herstellen der Verbindung zwischen dem Arbeitsgerät und dem Aufnahmerahmen betätigt werden. Dies ist vor allem vorteilhaft, wenn das Anbringen des Arbeitsgerätes am Fahrzeug ausschließlich vom Fahrersitz möglich sein soll, ohne daß der Fahrer seinen Sitzplatz verläßt.

Um beim Ankoppeln die gegenseitige Ausrichtung zu erleichtern, sind in der Nähe der Befestigungselemente 16 Zentrierelemente in Form von Führungsschuhen 22 vorgesehen. Diese haben ballige, zu den Befestigungselementen hinleitende Führungsflächen 23.

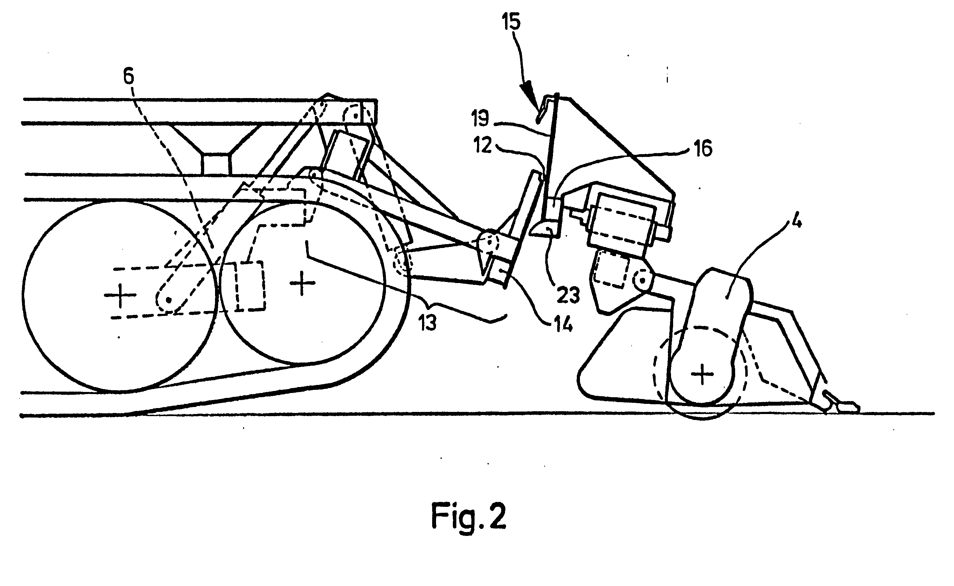

Die Figuren 1 bis 3 zeigen den Ankoppelungsvorgang. Das Fahrzeug wird rückwärts an das abgestellte Arbeitsgerät so weit herangefahren, bis sich der Bolzen 12 in Anlage an der Platte 19 befindet. Dies zeigt die Figur 2. Anschließend wird mit Hilfe der Stelleinrichtung 6 der Aufnahmerahmen 13 so weit nach oben gehoben, bis der Bolzen 12 in dem hakenförmigen Gegenkoppelelement 15 einrastet. Hierbei hilft die Platte. Die Wangen stellen eine Führung für den den Bolzen langsam umgreifenden Haken 15 des Gegenkoppelelementes dar, so daß das Arbeitsgerät sich zu dem Fahrzeug quer zur Fahrtrichtung ausrichten kann.

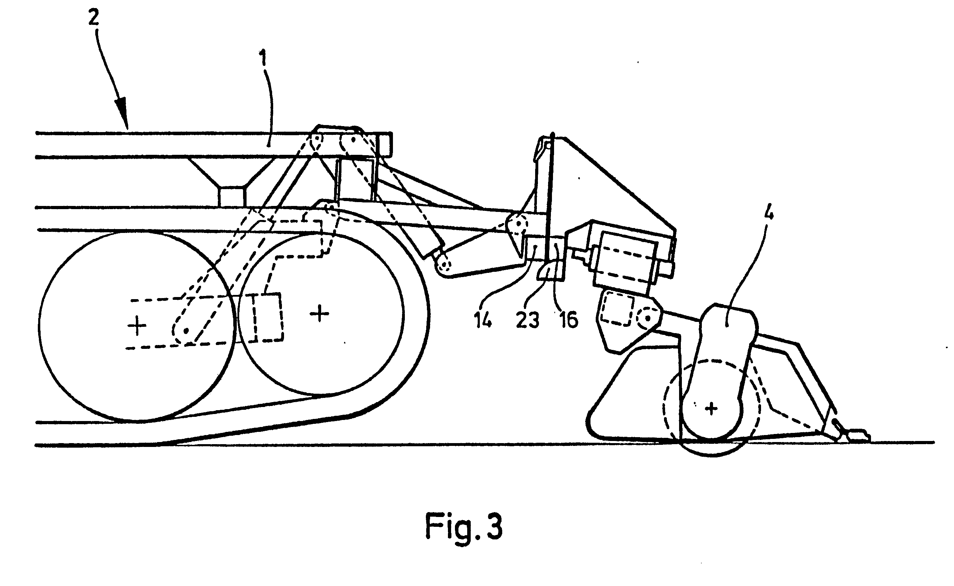

Ist das Arbeitsgerät gegenüber dem Fahrzeug schräg abgestellt, so genügt es jetzt durch Anheben des Arbeitsgerätes durch eine entsprechende, nach oben gerichtete Bewegung des Aufnahmerahmens 13, um das Arbeitsgerät am Haken hängend so einpendeln zu lassen, daß die Befestigungselemente 14 in die entsprechenden Befestigungselemente 16 einrasten oder diese miteinander verbunden werden können. Figur 3 zeigt das fertig angekoppelte Arbeitsgerät.

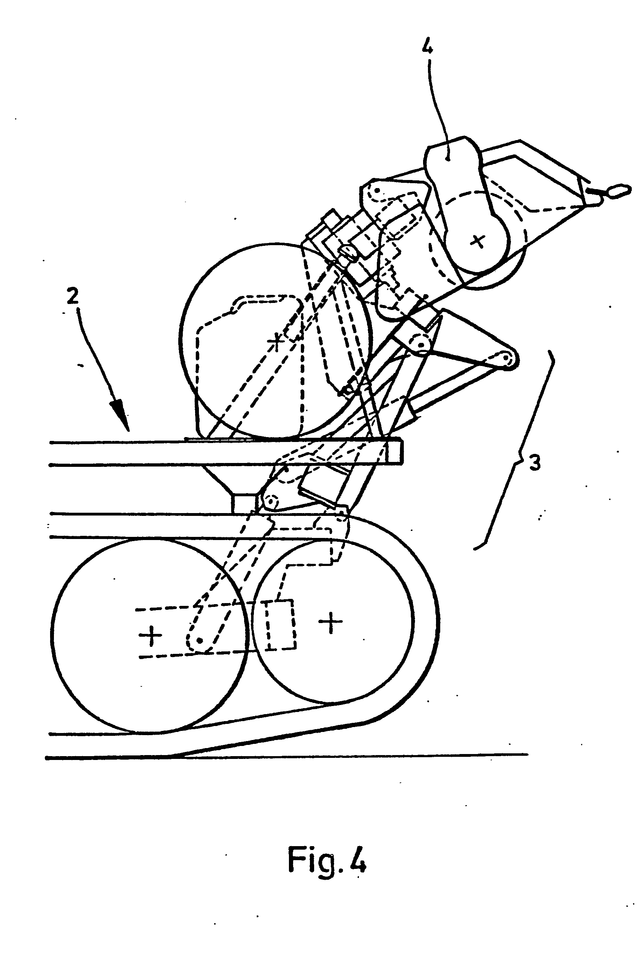

Die Führungsflächen 23 ermöglichen die exakte Ausrichtung des dem Arbeitsgerät 4 zugeordneten Teil der Haltevorrichtung 3 gegenüber demjenigen dem Fahrzeug zugeordneten Teil der Haltevorrichtung. Figur 4 zeigt das hochgehobene Arbeitsgerät nach dem Ankoppeln.

Bei dem gezeigten Ausführungsbeispiel ist das Arbeitsgerät für den Heckanbau des Fahrzeuges vorgesehen. Die Erfindung ist nicht auf dieses Ausführungsbeispiel beschränkt. Es ist insbesondere möglich, nach entsprechender Umgestaltung und Umorientierung der Haltevorrichtung den Frontanbau der Arbeitsgeräte zu ermöglichen.

**Patentansprüche**

1. Fahrzeug mit einem Arbeitsgerät, (4) das über eine Haltevorrichtung (3) am Fahrzeug lösbar befestigt ist, wobei die Haltevorrichtung einen am Fahrzeug angeordneten, über Stelleinrichtungen gegenüber diesem veränderbaren Aufnahmerahmen (13) mit Koppelelementen aufweist, denen am Arbeitsgerät Gegenkoppelelemente zugeordnet sind, wobei am Arbeitsgerät eine quer in Fahrtrichtung orientierte, dreiecksförmige Platte (19) angeordnet ist, die in ihrem oberen Bereich als Gegenkoppelelement einen einzigen in Richtung der Ankoppelung vorspringenden Haken (15) aufweist, dadurch gekennzeichnet, daß die Platte (19) zur pendelnden Aufnahme des Hakens (I5) ohne seitliche Begrenzungen vertikal ausgerichtet ist und als Koppelelement für den offenen Haken (15) ein in etwa horizontaler Bolzen (12) vorhanden ist, der zwischen zwei Wangen (9) gehalten ist.

2. Fahrzeug nach Anspruch 1, dadurch gekennzeichnet, daß der Haken (15) dreiecksförmig gestaltet ist, wobei eine Spitze vertikal nach unten gerichtet ist.

3. Fahrzeug nach Anspruch 1 oder 2, dadurch gekennzeichnet, daß die Wangen (9) einen gegenseitigen Abstand (B) aufweisen, der größer ist als die größte horizontale Breite (b) des Hakens.

4. Fahrzeug nach wenigstens einem der Ansprüche 1 bis 3, dadurch gekennzeichnet, daß der Haken einen L-förmigen Querschnitt aufweist, wobei der eine L-Schenkel (20) in etwa horizontal verläuft und an der Platte befestigt ist, während der andere (21) in Richtung der Ankoppelung gesehen, leicht von der Platte weggeneigt ist.

5. Fahrzeug nach wenigstens einem der Ansprüche 1 bis 4, dadurch gekennzeichnet, daß den Koppel- bzw. Gegenkoppelelementen (14, 16) die Ankoppelung leitende Zentrierelemente (23) beigeordnet sind.

## Claims

1. A vehicle having a work appliance (4) releasably secured to the vehicle by means of a suspension device (3), wherein said suspension device comprises a mounting frame (13) connected to the vehicle for adjustment relative thereto through adjustment means and provided with coupling elements for cooperation with complementary coupling elements on said work appliance, and wherein said work appliance is equipped with a triangular plate (19) extending transversely of the direction of travel and carrying at its upper portion a complementary coupling element in the form of a single hook (15) projecting in the coupling direction, characterized in that said plate (19) is vertically oriented for pendular engagement of said hook (15) without lateral limitation, and as a coupling element for said open hook (15) there is provided a substantially horizontal bolt (12) retained between two sidewall members (9).

2. A vehicle according to claim 1, characterized in that said hook (15) is of triangular shape with its point directed vertically downwards.

3. A vehicle according to claim 1 or 2, characterized in that said sidewall members (9) are spaced from one another by a distance (B) which is greater than the maximum horizontal width (b) of said hook (15).

4. A vehicle according to any of claims 1 to 3, characterized in that said hook is of L-shaped crosssectional configuration, one leg (20) of said L-shape extending substantially horizontal and being secured to said plate, the other leg (21) being slightly inclined away from said plate as seen in the coupling direction.

5. A vehicle according to any of claims 1 to 4, characterized in that said coupling elements or complementary coupling elements, respectively (14, 16) are adapted to cooperate with centering elements (23) for guiding the coupling operation.

## Revendications

1.- Véhicule muni d'un instrument de travail (4) lié au véhicule de façon démontable par l'intermédiaire d'un dispositif de fixation (3), le dispositif de fixation comportant un chassis récepteur (13) disposé sur le véhicule et modifiable par rapport à celui-ci par des moyens de réglage, et muni déléments d'accouplement auxquels sont associés des contre-éléments d'accouplement sur l'instrument de travail, une plaque triangulaire (19) orientée transversalement dans la direction de la marche étant disposée sur l'instrument de travail et présentant dans sa région supérieure, en tant que contre-élément d'accouplement, un crochet unique (15) faisant saillie en direction de l'accouplemeent, caractérisé en ce que la plaque (19) pour la réception oscillante du crochet (15) sans limitations latérales est dirigée verticalement et qu'un axe (12) à peu près horizontal est prévu comme élément d'accouplement pour le crochet ouvert (15) et est tenu entre deux flasques (9).

2.- Véhicule selon la revendication 1, caractérisé en ce que le crochet (15) a une configuration triangulaire, une pointe étant dirigée verticalement vers le bas.

3.- Véhicule selon l'une des revendications 1 et 2, caractérisé en ce que les flasques (9) présentent une distance mutuelle (B) supérieure à la largeur horizontale maximale (b) du crochet.

4.- Véhicule selon l'une au moins des revendications 1 à 3, caractérisé en ce que le crochet présente une section transversale en L l'une des branches (20) du L s'étendant à peu près horizontalement et étant liée à la plaque, tandis que l'autre (21), vue en direction de l'accouplement, est légèrement inclinée à l'éloignement de la plaque.

5.- Véhicule selon l'une au moins des revendications 1 à 4, caractérisé en ce que des éléments de centrage (23) guidant l'accouplement sont associés aux éléments d'accouplement et/ou aux contre-éléments d'accouplement (14, 16).

Fig.1

Fig. 2

Fig. 3

Fig. 4

Fig. 5